# EUROPÄISCHE PATENTANMELDUNG

(11) **EP 1 705 621 A2**
(43) Veröffentlichungstag der Anmeldung: **27.09.2006**
(21) Anmeldenummer: 06110857.7
(22) Anmeldetag: 08.03.2006
(51) Int. Cl.: G08G 1/09

(54) **Verfahren und Vorrichtung zum Übermitteln von Nachrichten von einem Kraftfahrzeug an einen Empfänger**

(30) Priorität: 23.03.2005 DE 102005013443
(71) Anmelder: ROBERT BOSCH GMBH, 70442 Stuttgart (DE)
(72) Erfinder: Becker, Jan-Carsten, 71701 Schwieberdingen (DE)

(57) **Zusammenfassung**

Um ein Verfahren zum Übermitteln einer Nachricht von einem Kraftfahrzeug zu einem Empfänger, wobei im Kraftfahrzeug ein Navigationssystem vorgesehen ist und ein Mobiltelefon mit einem Steuergerät des Kraftfahrzeugs in Verbindung steht, anzugeben, mit dem eine zuverlässige Übermittlung der Nachricht gewährleistet ist, wird vorgeschlagen, dass das Mobiltelefon vom Navigationssystem bei Annäherung an den Zielpunkt zur Übermittlung einer Nachricht veranlasst wird. Des Weiteren wird ein entsprechendes Navigationssystem angegeben.

## Beschreibung

### Technisches Gebiet

Die Erfindung betrifft ein Verfahren zum Übermitteln einer Nachricht von einem Kraftfahrzeug an einen Empfänger, wobei im Kraftfahrzeug ein Navigationssystem vorgesehen ist und ein Mobiltelefon mit einem Steuergerät des Kraftfahrzeugs in Verbindung steht sowie auf ein entsprechendes Navigationssytem.

### Stand der Technik

Aus der Praxis der Kraftfahrzeugtechnik ist es bekannt, dass besonders bei höherwertigen Kraftfahrzeugen ein Navigationssystem vorhanden ist, das z. B. mit Hilfe der von GPS-Satelliten ausgesandten Signale die Position des Kraftfahrzeugs ermittelt und anhand von Straßeninformationen, die z. B. die in einem Speichermedium wie einer CD gespeichert sind, eine Fahrtroute vom aktuellen Standpunkt zu einem vom Nutzer des Kraftfahrzeugs angegebenen Zielpunkt berechnet und die jeweilige Fahrtroute dem Nutzer optisch und/oder akustisch anzeigt.

Hierbei ist es bekannt, dass vom Nutzer verschiedene Parameter vorgegeben werden können, wie u. a. eine schnelle oder langsame Fahrweise, Daten bezüglich des Kraftfahrzeugs, die beispielsweise bei einem zu großen Gesamtgewicht das Befahren einer steilen Passstraße unmöglich machen, so dass diese bei der Routenberechnung ausgeschlossen werden soll, nicht zu befahrende Streckenabschnitte wie Mautstraßen oder dergleichen. Des Weiteren können vom Navigationssystem äußere Umstände, wie ein Straßenzustand oder ein Stau, der dem Navigationssystem z. B. über ein Verkehrsleitsystem mitgeteilt wird, berücksichtigt werden, um eine Umgehung des Staus zu berechnen.

Weiterhin ist es bekannt, dass Kraftfahrzeuge im Bereich ihres Armaturenbretts oder einer Mittelkonsole über ein fest eingebautes Telefon oder über eine Freisprecheinrichtung bzw. eine Handyhalterung verfügen, in die ein vom Nutzer mitgeführtes Mobiltelefon vor Fahrtantritt eingesteckt wird. Dabei ist die Handyhalterung bzw. die Freisprecheinrichtung derart ausgelegt, dass eine Wiederaufladung der Akkumulatoren des Handys erfolgt und z. B. bei einem eingehenden Telefonanruf, der vom Nutzer bzw. Lenker des Kraftfahrzeugs während der Fahrt angenommen wird, eine Audioanlage des Kraftfahrzeugs stumm geschaltet wird, um ein Gespräch des Nutzers mit einem Anrufer zu ermöglichen.

Hierzu steht die Freisprecheinrichtung bzw. das in die Handyhalterung der Freisprecheinrichtung eingesteckte Mobiltelefon mit einem zentralen Steuergerät des Kraftfahrzeugs in Verbindung, das beispielsweise beim Entgegennehmen eines eingehenden Anrufs die ebenfalls mit dem Steuergerät in Verbindung stehende Audioanlage stumm schaltet.

Das zentrale Steuergerät im Kraftfahrzeug dient zur Ansteuerung und Überwachung aller Funktionen des Kraftfahrzeugs und ist in an sich bekannter Weise hard- und/oder softwaremäßig ausgebildet, um die Funktionen zu überwachen und in Abhängigkeit der vom Nutzer eingegebenen Steuerbefehle anzusteuern.

Besonders bei einer Fahrt des Nutzers entweder zu sich nach Hause oder zurück von einem auswärtigen Termin zu seinem Arbeitsplatz wird es vom Nutzer häufig vergessen, seine genaue Ankunftszeit mitzuteilen, so dass es hier zu Reibungsverlusten kommen kann, da er beispielsweise unerwartet an seinem Arbeitsplatz auftaucht und die für den weiteren Tagesablauf notwendigen Informationen dort noch nicht zur Verfügung stehen.

Ausgehend von diesem Stand der Technik liegt der Erfindung die Aufgabe zugrunde, ein Verfahren zum Übermitteln von Nachrichten von einem Kraftfahrzeug zu einem Empfänger anzugeben, das selbsttätig von einer entsprechend ausgebildeten Vorrichtung durchgeführt wird, um eine zuverlässige Informationsübermittlung zu gewährleisten.

Diese Aufgabe wird durch die in den Ansprüchen 1 und 7 angegebenen Merkmale gelöst.

Der Kerngedanke der Erfindung besteht darin, dass mit Hilfe eines an sich bekannten Navigationssystems die aktuelle Position des Kraftfahrzeugs ermittelt wird. Zusätzlich ist in dem Navigationsgerät ein Zielpunkt abgespeichert, der über eine vom Navigationssystem berechnete und dem Nutzer des Kraftfahrzeugs angezeigte Fahrtroute angesteuert wird. Sobald das Kraftfahrzeug sich dem Zielpunkt, bevorzugt entsprechend den nachfolgend beschriebenen Parametern, nähert, wird das im Kraftfahrzeug vorhandene und über die Freisprecheinrichtung mit dem zentralen Steuergerät in Verbindung stehende Mobiltelefon vom Navigationssystem dazu veranlasst, eine Nachricht an einen Empfänger zu übermitteln. Im Rahmen der Erfindung ist es dabei mit umfasst, dass das Navigationssystem mittelbar mit dem Mobiltelefon, beispielsweise jeweils über eine Verbindung mit dem zentralen Steuergerät, oder unmittelbar über eine direkte Verbindungsleitung in Kontakt steht. Es wäre möglich, dass das Mobiltelefon nicht mit der Freisprecheinrichtung verbunden wird sondern mit einem eigenen Datenkabel unmittelbar mit dem Navigationssystem. Zur direkten Verbindung des Navigationssystems mit dem Mobiltelefon kann auch eine an sich beliebige Funkverbindung bzw. eine Bluetooth-Verbindung verwendet werden.

Es ist für den Fachmann ersichtlich, dass hier beliebige Nachrichten oder Informationen vom Mobiltelefon an einen beliebigen Empfänger übermittelt werden können. Beispielsweise kann bei einer Annäherung an eine Wohnung des Nutzers ein in der Wohnung vorhandenes Haushaltsmanagementsystem vom Mobiltelefon eine Nachricht erhalten bzw. durch einen eingehenden Anruf aktiviert werden. Nachfolgend wird vom Haushaltsmanagementsystem beispielsweise das Einschalten der Heizung und/oder das Herunterkühlen des Getränkevorrats im Kühlschrank oder dergleichen veranlasst.

Der Vorteil der Erfindung besteht darin, dass durch das selbsttätige Übermitteln von Nachrichten oder Informationen bei der Annäherung des im Kraftfahrzeug sitzenden Nutzers an einen Zielpunkt dort bereits die notwendigen Maßnahmen entweder selbsttätig oder z. B. von einer vom Mobiltelefon benachrichtigten Sekretärin vorgenommen werden können. Beispielsweise kann bei Annäherung des Nutzers an seinen Arbeitsplatz eine entsprechende Mitteilung an seine Sekretärin übermittelt werden, die daraufhin nicht nur einen Kaffee kocht sondern auch die zu erledigenden Vorgänge vorbereitet.

Somit wird für den Nutzer eine erhebliche Zeitersparnis ermöglicht, da er, sobald er am Ziel ankommt, entweder sofort weitere Arbeiten erledigen kann oder, falls er zu Hause ankommt, sich unmittelbar entspannen kann, da die Wohnung bereits geheizt ist.

Vorteilhafte Ausgestaltungen der Erfindungen sind in den Unteransprüchen gekennzeichnet.

Mit einer im Anspruch 2 angegebenen Ausgestaltung ist eine Anpassung an unterschiedliche Gegebenheiten des Straßennetzes und/oder der Verkehrsverhältnisse ermöglicht. Ist der gewünschte Zielpunkt beispielsweise über eine schnell zu befahrende Autobahn erreichbar, so wird das Mobiltelefon bei Unterschreiten einer insbesondere einstellbaren Entfernung vom Zielpunkt vom Navigationssystem zur Übermittlung der Nachricht veranlasst, da üblicherweise die restliche verbleibende Fahrtstrecke jeweils in einem ungefähr gleichen Zeitraum zurücklegbar ist. Ebenso kann von dem Navigationssystem die zu erwartende restliche Fahrtdauer zum Zielpunkt ermittelt und beispielsweise eine halbe Stunde vor Erreichen des Zieles die entsprechende Information übermittelt werden. Hierbei wird insbesondere vom Mobiltelefon nicht nur die Ankunft an sich sondern auch die vom Navigationssystem berechnete ungefähre Ankunftszeit übermittelt.

In bevorzugter Weise wird die Nachricht, die vom Mobiltelefon an einen Empfänger auf Veranlassung des Navigationssystems übermittelt wird, entsprechend dem Anspruch 3 von einem Nutzer vorgegeben. Dies kann beispielsweise eine Information für eine Sekretärin sein: "Ich bin in einer halben Stunde im Büro". Weiterhin ist vorgeschlagen, dass verschiedene Nachrichten an den gleichen oder unterschiedliche Empfänger übermittelt werden. Z. B. könnte am Abend bei einer Fahrt nach Hause eine Nachricht an den Arbeitsplatz übermittelt werden, dass nunmehr der Feierabend beginnt, und eine weitere Nachricht nach Hause übermittelt werden, dass der Nutzer bald zu Hause ist.

Ebenso können bei der Annäherung an das Ziel im zeitlichen Abstand mehrere Informationen an den gleichen Empfänger übermittelt werden, um beispielsweise nacheinander das Anschalten der Heizung und das Anschalten einer Außenbeleuchtung zu veranlassen.

Für die zu übermittelnden Nachrichten ist im Anspruch 4 ausgeführt, dass von dem Mobiltelefon an sich bekannte Kurzmitteilungen (SMS), Medienmitteilungen (MMS) und/oder Sprachmitteilungen an den Empfänger übermittelt werden, wobei der Nutzer die Sprachmitteilung vorher in dem Mobiltelefon gespeichert hat. Ebenso ist es möglich, dass der Festnetzanschluss am Zielpunkt angerufen und über das Mobiltelefon ein Anrufbeantworter automatisch abgefragt wird. Weiterhin kann eine Telefonnummer auch mit einer bestimmten Anzahl an Klingelsignalen angerufen werden, um z. B. ein Haushaltsmanagementsystem zu aktivieren.

Zur Erhöhung des Komforts und um das Übermitteln der Nachrichten zuverlässig zu gewährleisten ist im Anspruch 5 angegeben, dass die Annäherung an einen Zielpunkt vom Navigationssystem selbsttätig überwacht wird. Hierzu wird das Navigationssystem im Kraftfahrzeug vom zentralen Steuergerät in einem passiven Überwachungsmodus betrieben, in dem keine Richtungsangabe zu einem vom Nutzer eingegebenen Zielpunkt ausgegeben wird, da dies beispielsweise bei der täglichen Fahrt von der Arbeitsstelle nach Hause nicht notwendig ist. Dennoch wird von dem Navigationssystem die Annäherung an einen häufig angefahrenen Zielpunkt, der vom Nutzer auch in das Navigationssystem eingegeben werden kann, festgestellt und dementsprechend bei einer Annäherung an den Zielpunkt eine Nachricht an einen Empfänger übermittelt.

Um hierbei eine irrtümliche Nachrichtenübermittlung zu vermeiden, die beispielsweise bei einer Fahrt durch die Stadt, die in der Nähe der Wohnung des Nutzers des Kraftfahrzeugs vorbeiführt, wobei der Nutzer die Wohnung selbst nicht anfahren möchte, erfolgen würde, ist im Anspruch 6 vorgeschlagen, dass vor der Übermittlung der Nachricht eine Abfrage vorgenommen wird, ob die Nachricht tatsächlich übermittelt werden soll. Dies kann beispielsweise vom zentralen Steuergerät im Kraftfahrzeug ausgeführt werden, das vom Navigationssystem die Mitteilung erhält, dass nunmehr eine Nachricht übermittelt werden sollte. Vor der Übermittlung der Nachricht kann das Steuergerät z. B. über die Audioanlage des Kraftfahrzeugs eine abgespeicherte Sprachbotschaft ausgeben, woraufhin der Nutzer die Anfrage entweder bestätigt oder verneint, beispielsweise durch Betätigen eines Betätigungselements im Armaturenbrett. Die Abfrage kann auch im Normalbetrieb vorgenommen werden.

Es ist für den Fachmann ersichtlich, dass sowohl das Navigationssystem als auch das Mobiltelefon mit einem zentralen Steuergerät des Kraftfahrzeugs in Verbindung stehen, um die Übermittlung von Nachrichten durch das Mobiltelefon an einen Empfänger bei Annäherung an einen Zielpunkt zu ermöglichen. Dabei kann im Rahmen der Erfindung die Verbindung zwischen dem Mobiltelefon und dem Navigationssystem in an sich beliebiger Weise ausgebildet sein.

In bevorzugter Weise ist diese Verbindung nach Anspruch 8 in Form eines auf dem Gebiet der Kraftfahrzeugtechnik bekannten CAN-Busses ausgeführt, um die entsprechenden Informationen und Steuersignale vom Navigationssystem bzw. Mobiltelefon an das Steuergerät bzw. umgekehrt zu übermitteln. In gleicher Weise kann diese Verbindung auch mit einer direkten Leitung oder einer beliebigen Funkverbindung, insbesondere einer Bluetooth-Verbindung hergestellt werden.

Weiterhin ist insbesondere das Steuergerät entsprechend dem Anspruch 9 hard- und/oder softwaremäßig derart ausgelegt, dass die vorstehend beschriebenen Verfahren von dem Mobiltelefon bzw. dem Navigationssystem im Kraftfahrzeug ausgeführt werden können.

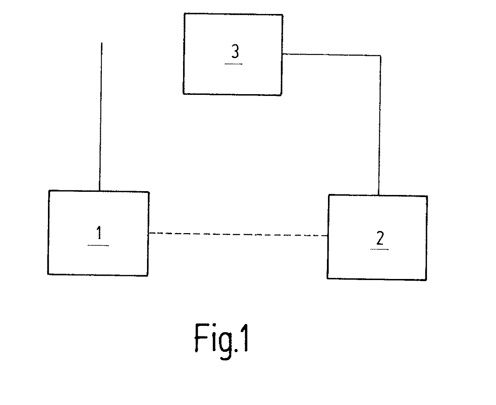

## Patentansprüche

1. Verfahren zum Übermitteln einer Nachricht von einem Kraftfahrzeug an einen Empfänger, wobei im Kraftfahrzeug ein Navigationssystem vorgesehen ist und ein Mobiltelefon mit einem Steuergerät des Kraftfahrzeugs in Verbindung steht, **dadurch gekennzeichnet, dass** das Mobiltelefon vom Navigationssystem bei Annäherung an einen Zielpunkt zur Übermittlung einer Nachricht an den Empfänger veranlasst wird.

2. Verfahren nach Anspruch 1, **dadurch gekennzeichnet, dass** die Nachricht bei Unterschreiten einer vorzugsweise einstellbaren Entfernung und/oder einer verbleibenden restlichen Fahrtdauer zum Zielpunkt übermittelt wird.

3. Verfahren nach Anspruch 1 oder 2, **dadurch gekennzeichnet, dass** von einem Nutzer eine zu übermittelnde Nachricht vorgegeben wird, insbesondere mehrere.

4. Verfahren nach einem der Ansprüche 1 bis 3, **dadurch gekennzeichnet, dass** eine SMS, MMS und/oder eine Sprachmitteilung übermittelt und/oder ein Anrufbeantworter abgehört wird.

5. Verfahren nach einem der Ansprüche 1 bis 4, **dadurch gekennzeichnet, dass** eine Annäherung an einen Zielpunkt selbsttätig vom Navigationssystem überwacht wird.

6. Verfahren nach einem der Ansprüche 1 bis 5, **dadurch gekennzeichnet, dass** eine Abfrage vorgenommen wird, ob die Nachricht tatsächlich übermittelt werden soll.

7. Navigationssystem in einem Kraftfahrzeug zur Berechnung einer Fahrtroute von einem Ausgangspunkt zu einem Zielpunkt, mit einem Steuergerät zur Steuerung aller Funktionen im Kraftfahrzeug und einem mit dem Steuergerät verbundenen Mobiltelefon, **dadurch gekennzeichnet, dass** das Mobiltelefon vom Navigationssystem bei Annäherung an den Zielpunkt zur Übermittlung einer Nachricht an den Empfänger veranlassbar ist.

8. Navigationssystem nach Anspruch 7, **dadurch gekennzeichnet, dass** das Mobiltelefon und das Navigationssystem entweder unmittelbar oder mittelbar über das Steuergerät, insbesondere über einen CAN-Bus, miteinander in Verbindung stehen.

9. Navigationssystem nach Anspruch 7 oder 8, **dadurch gekennzeichnet, dass** das Navigationssystem zur Durchführung der Verfahren nach einem der Ansprüche 2 bis 6 ausgelegt ist.
